# EUROPÄISCHE PATENTSCHRIFT

(11) **EP 1 398 684 B1**
(45) Veröffentlichungstag und Bekanntmachung des Hinweises auf die Patenterteilung: **10.02.2010**
(21) Anmeldenummer: 03019440.1
(22) Anmeldetag: 28.08.2003
(51) Int. Cl.: G05D 1/02, B60K 31/00

(54) **Fahrzeugführungssystem**
System for guiding vehicles
Système de guidage de véhicules

(30) Priorität: 12.09.2002 DE 10242293
(43) Veröffentlichungstag der Anmeldung: 17.03.2004
(73) Patentinhaber: AUDI AG, 85045 Ingolstadt (DE)
(72) Erfinder: Ludger Schilgen, Olaf, 85057 Ingolstadt (DE); Remlinger, Wolfram, 85049 Ingolstadt (DE)
(74) Vertreter: Thielmann, Frank

(56) Entgegenhaltungen:
- EP-A- 0 780 747
- EP-A- 0 781 679
- DE-A1- 10 036 276
- DE-A1- 19 748 912
- PATENT ABSTRACTS OF JAPAN Bd. 015, Nr. 322 (P-1239), 16. August 1991 (1991-08-16) & JP 03 118614 A (MAZDA MOTOR CORP), 21. Mai 1991 (1991-05-21)

## Beschreibung

Die vorliegende Erfindung betrifft ein Fahrzeug mit einer integrierten Vorrichtung zum Führen des Fahrzeugs nach dem Oberbegriff von Patentanspruch 1. Ferner betrifft die vorliegende Erfindung ein entsprechendes Verfahren zur Führung des Fahrzeugs nach dem Oberbegriff von Patentanspruch 11.

Die heutige Situation beim Steuern von Kraftfahrzeugen ist die, dass der Fahrer beim Fahren hauptsächlich die drei Aufgaben Fahrstabilisierung, Bahnführung und Navigation gleichzeitig, in der Regel ohne direkte weitere Hilfsmittel leistet. Im vorliegenden Fall sei insbesondere die Aufgabe der Bahnführung näher betrachtet. Eine gewisse Unterstützung erfährt der Fahrer durch bereits bekannte Systeme. Hierzu ist beispielsweise eine spezielle Lenkgeometrie der Fahrzeuge zu zählen, mit der die Fahrzeuge selbstzentrierend fahren. Dies bedeutet, dass das Fahrzeug nach einer Kurvenfahrt von selbst in den Geradeauslauf zurücklenkt (Eigenlenkverhalten). Dies erleichtert die Bahnführung auf gerader Strecke. Des Weiteren kann der Fahrer teilweise auf ein Abkommen von der Fahrbahn aufmerksam gemacht werden. Dies erfolgt etwa durch fahrbahnfest aufgebrachte Seitenstreifen mit Erhebungen, die dem Fahrer durch ein hochfrequentes Rütteln im Lenkrad, welches durch das Überfahren der Erhebungen verursacht wird, einen Hinweis auf nicht optimale Bahnführung geben.

Weiterhin gibt es Visualisierungshilfen im Fahrzeug, die die Spurführung indirekt beeinflussen, indem sie als Warnfunktion eine Bahnführung durch geänderten Bahnführungswunsch des Fahrers beeinflussen. Als derartige Visualisierungshilfe sind Nachtsichtsysteme bekannt, die aber ausschließlich eine Hilfestellung bieten, um infrarotstrahlende Hindernisse, somit vor allem Personen, rechtzeitig wahrzunehmen, und die geplante Bahnführung und -geschwindigkeit daran anzupassen. Die Bahnführung selbst wird bei diesem System dem Fahrer nicht erleichtert oder abgenommen.

Für zukünftige Systeme stellt sich die Herausforderung, komplexe sicherheitsrelevante Fahrzeugfunktionen mit Hilfe der Elektronik ohne mechanische Rückfallebenen zur realisieren. Diese sogenannten by-Wire-Systeme für Lenkung, Bremse, Antriebsstrang und Fahrwerk lassen neben Produktions- und Konstruktionsvorteilen ein großes Potential für die Erhöhung aktiver und passiver Sicherheit erwarten.
Notwendige Vorraussetzung für zukünftige Fahrassistenzsysteme sind die einzelnen by-Wire Systeme wie Throttle-by-Wire, Brake-by-Wire, Steer-by-wire und Suspension-by-Wire, allgemein zusammengefasst als X-by-Wire.

Die meisten derzeit in Entwicklung befindlichen Assistenz-Systeme haben das Ziel, das Autofahren - wie bereits erwähnt - leistungsfähiger und vor allem sicherer zu machen. Ein bedeutender Themenbereich ist dabei das sogenannte "technische Sehen", bei dem durch optische Sensorik in verschiedenen Wellenlängenbereichen (kann sowohl sichtbar und unsichtbar sein) und nachgeschaltete elektronische Bildverarbeitung das Umfeld des Fahrzeugs analysiert wird. Aus der Auswertung dieser Daten und den Kenntnissen über den Zustand des eigenen Fahrzeugs werden durch elektronische Systeme sowohl Warnhinweise an den Fahrer gegeben, als auch selbständige Eingriffe in den Fahrablauf vorgenommen. Die Eingriffe wirken im Wesentlichen auf den Antriebsstrang, die Bremse und die Lenkung. Die Bahn- beziehungsweise Fahrzeugführung des Fahrers wird dadurch ergänzt und korrigiert.
Bei vollständiger Nutzung von X-by-Wire Systemen verändert sich der gesamte Fahrerarbeitsplatz im Fahrzeug zu einem reinen Dateneingabeumfeld, die die nachgeschalteten Aktuatorsysteme im Normalfall in Echtzeit ausführen sollen.

Um den Nutzen dieser Fahrerassistenzsysteme zu maximieren, wird ein Teil der Fahraufgaben dem Menschen entzogen. Das Fahren wird dadurch weniger belastend, aber auch weniger interessant sein. Hierdurch drohen neue Gefahren, wie z. B. durch eine Unterforderung des Fahrers oder durch Systemstörungen und vor allem auch dadurch, dass die Systeme für den Fahrer nicht transparent sind. Sobald die Systeme kontinuierlich Fahraufgaben teilweise oder vollständig übernehmen, wird die Problematik der Akzeptanz und der Interaktion des Fahrers mit dem System offenbar. Soll der Fahrer jedoch weiterhin in gewohnter, konventioneller Weise sein Fahrzeug führen, wird der Nutzen dieser Assistenzsysteme nicht voll zum Tragen kommen, da die Systeme dann nicht wirkungsvoll eingebunden werden können.

Aus der EP 0 781 679 A1 ist eine Vorrichtung zum Fernsteuern eines Kraftfahrzeugs bekannt, bei der eine Bedienperson vorab Orte festlegen kann, die das Kraftfahrzeug bei seiner Fahrt passieren soll. Die EP 0 781 679 A1 erwähnt auch die Möglichkeit, dass sich die Bedienperson in dem Kraftfahrzeug befindet.

Die Aufgabe der vorliegenden Erfindung besteht daher darin, ein Fahrzeug und ein Verfahren zum Führen eines Fahrzeugs vorzuschlagen, mit denen die Führung eines Fahrzeugs einerseits erleichtert und andererseits der Fahrer nicht völlig unterfordert wird.

Erfindungsgemäß wird diese Aufgabe gelöst durch ein Fahrzeug mit einer integrierten Vorrichtung zum Führen des Fahrzeugs mit den Merkmalen gemäß Patentanspruch 1.

Ferner ist erfindungsgemäß vorgesehen ein Verfahren zum Führen eines Fahrzeugs durch Erfassen von Umgebungsdaten aus der Umgebung des Fahrzeugs, Eingeben von Fahrzeugführungsdaten durch einen Fahrer und Steuern des Fahrzeugs auf der Grundlage der Umgebungsdaten und der Fahrzeugführungsdaten, wobei die Fahrzeugführungsdaten Vorlaufdaten, die zukünftige Steuerungsmanöver des Fahrzeugs betreffen, umfassen, so dass das Fahrzeug entsprechend einer durch die Vorlaufdaten vordefinierten Zeitdauer automatisch oder teilautomatisch anhand der Umgebungsdaten und Vorlaufdaten gesteuert wird.

Erfindungsgemäß ist somit vorgesehen, dem Fahrzeugführer eine zeitlich voll variable prädiktive Spurführung zu ermöglichen. Der Fahrzeugführer ist damit in der Lage, zwischen 0% Prädiktion und 100 % Prädiktion frei und flexibel zu variieren. Das bedeutet, dass das System in der Lage ist, die Spurführung und darüber hinaus auch alle weiteren Teile der Fahraufgabe bis hin zur Navigation entweder vollständig zu übernehmen, oder aber mit vollständig frei fließendem Übergang dem Fahrer keinerlei Unterstützung zu bieten, wenn 0 % Prädiktion und damit manuelle Steuerung gewählt ist. Dabei werden die gleichen Betätigungseinrichtungen, die zur Eingabe der Vorlaufdaten benutzt werden, bei 0 % Prädiktion zur manuellen Steuerung benutzt. Die 100% Prädiktion können sich in dieser Betrachtung mit ihrer Basis jeweils entweder auf die Gesamtstrecke oder auf einen sinnvoll unterscheidbaren Teilabschnitt des gewünschten zurückzulegenden Gesamtweges vom Startpunkt bis ins Ziel beziehen, ein Beispiel wäre eine zu befahrende Autobahn. Ein autonom fahrendes Fahrzeug ist damit nicht nur auf der gesamten Wegstrecke, sondern auch auf definierten Teilstrecken denkbar.
Vorteilhafte Ausgestaltungen der Erfindung ergeben sich aus den Unteransprüchen.

In einer vorteilhaften Ausführungsform ist vorgesehen, dem Fahrzeugführer eine Visualisierung der Spurführung als Einspiegelung in eine Windschutzscheibe zu präsentieren, die es ihm ermöglicht, in der normalen Fahrerperspektive aus dem Fahrzeug heraus ein überlagertes kontaktanaloges Bild zu sehen. Kontaktanalog bedeutet hier, dass der mögliche Versatz des sich ergebenden Bildes durch Kopfbewegungen mittels einer Automatik ausgeglichen wird. Darüber hinaus ist zur Visualisierung der Spurführung im Umfeld des Fahrziels und optional auch der Navigation dorthin ein weiterer Bildschirm oder ein weiterer Betrachtungsmodus zweckmäßig.

Es ist eine Ausführung vorteilhaft, bei der die Steuereinrichtung zur Eingabe von Fahrzeugsführungsdaten und die Steuereinrichtung zur Steuerung des Fahrzeugs auf der Grundlage der Umgebungsdaten identisch ist.

Das System ist funktional in den Regelkreis Fahrer - System - Fahrzeug eingebunden. Ein- bzw. Ausschalten erfolgt daher mit der Inbetriebnahme des Fahrzeugs. Die Ausprägung, mit der das System sich dem Fahrer präsentiert, unterscheidet sich je nach Auslegung des Systems und dessen momentanem Zustand. Bei einer Prädiktion von 0% ist es nicht notwendig, das System oder eine seiner Rückmeldungen überhaupt dem Fahrer zu präsentieren. Ebenso ist es denkbar, bei auf die Gesamtstrecke bezogenen 100% Prädiktion, das somit vollautomatische System vor dem Fahrer wieder zu verbergen, also keinerlei Zusatzinformationen zu bieten.
Dieses verbietet sich jedoch in dem Bereich des teilautonomen und unterstützten Fahrens, da die Rückmeldungen und erzeugten Anzeigen eine wichtige Größe im Regelkreis Fahrer - System - Fahrzeug darstellen.

In der Ausgestaltung des Systems liegt ein Schwerpunkt somit in der Ausprägung der Mensch - System - Schnittstelle. Eine günstig erscheinende Ausprägung ist die Nutzung von ein oder zwei Side-Sticks zur Fahrzeugsteuerung. Diese können ohne Umgreifen sowohl zum Fahren ohne Prädiktion, als auch zur Interaktion mit dem System bei prädiktivem Fahren dienen und erhöhen durch diesen problemlosen Übergang der verschiedenen Nutzungsphasen die Akzeptanz des Systems.
Aber auch eine Ausprägung des Systems mit einem konventionell anmutenden Cockpit ist darstellbar. Durch die vollständige by-Wire Dateneingabe ist jedes der äußerlich konventionellen Bedienelemente prinzipiell in der Interaktion mit dem System auch zur Steuerung von anderen Größen in der Lage.

In dem Zustand der Assistenz der Spurführung wird die Geschwindigkeit des Fahrzeugs vorzugsweise nicht mehr direkt vom Fahrzeugführer, sondern durch das System, insbesondere auch unter Berücksichtigung von externen Vorgaben wie Geschwindigkeitsbegrenzungen oder persönlichen Vorlieben und Vorgaben, gewählt. Die Geschwindigkeit und Spurführung des Fahrzeugs können über weitere Hilfssysteme geregelt werden. So kann beispielsweise über Sensoren, die den Straßenverlauf erkennen können, die Geschwindigkeit so geregelt werden, dass das Fahrzeug sicher auf der Straße fährt.

Der Fahrzeugführer wird vorzugsweise vor die Wahl gestellt, die Größe der zeitlichen Prädiktion vorzugeben. Gibt er beispielsweise einen Systemvorlauf von 5 Sekunden vor, entspricht das bei einer Geschwindigkeit von 100 km/h einem Setzen der gewünschten Fahrspur auf der Straße in einer Vorausentfernung von etwa 100 m. Dieses Setzen des Systemvorlaufs erfolgt günstigerweise visuell kontrolliert über interaktive Beeinflussung eines Symbols. Die Eingabe kann beispielsweise mittels einer flexiblen, kontaktanalog virtuell auf der Straße liegenden Kurve mit einem darauf vor- und zurückpositionierbaren und damit zeitlich variabel prädiktiv wirkenden Positionsmarker erfolgen.

Erfindungsgemäß ergeben sich damit die technischen Vorteile, dass das Fahrzeug manuell, teilautomatisch und vollautomatisch steuerbar ist. Daneben kann eine Verbrauchsreduktion durch optimales Antriebsstrangmanagement erzielt sowie eine Koordination und Synchronisation von Fahrzeugen über Datenfunk ermöglicht werden.
Innerhalb der Visualisierung ergeben sich weitere Möglichkeiten der ergänzenden Information durch eine Systemkommunikation mit weiteren ähnlich ausgestatteten Fahrzeugen, es können die geplanten Fahrspuren der weiteren Fahrzeuge durch das System mit in die Visualisierung übernommen werden, und so die eigene Bahnführung sowohl durch den Fahrer als auch durch das System besser planbar und dadurch sicherer und komfortabler machen.

Ergonomische Vorteile bestehen in der Beibehaltung der vollständigen Kontrolle des Fahrers über das Fahrzeug, wobei eine ständige und volle Einbindung des Fahrers in den Fahrablauf erfolgt, Übergabeabläufe zwischen Mensch und System völlig problemlos sind und der Grad der Aufgabenteilung zwischen Mensch und Maschine individuell einstellbar ist.
Bei teilautonomer und/oder unterstützter Fahrt kann das System in Notsituationen sofort und ohne vorher nötiges Umgreifen des Fahrers die Kontrolle über das Fahrzeug wieder dem Fahrer übergeben, auch wenn das System weiter sicherheitsdienliche Unterstützung gewährleistet.
Vorteilhaft kommt hinzu, dass ein "Zeitfenster" der Blickabwendung für Sekundärtätigkeiten risikolos vergrößert und die Planungskompetenz des Fahrers für vorausschauendes Fahren besser genutzt werden kann. Damit läßt sich ein entspanntes, stressfreies Autofahren ohne Unterforderung realisieren.

Die vorliegende Erfindung wird nun anhand der beigefügten Zeichnungen näher erläutert, in denen zeigen:
- Figuren 1 A bis D: schematisierte Ansichten durch eine Windschutzscheibe;
- Figuren 2 A bis D: symbolische Darstellungen der Datenerfassungsbereiche bei unterschiedlichen Steuerungsmodi; und
- Figur 3: eine fotografische Darstellung des Blicks aus einer Windschutzscheibe mit erfindungsgemäßem Fahrerassistenzsystem.

Die nachfolgend beschriebenen Ausführungsformen stellen bevorzugte Ausführungsbeispiele der vorliegenden Erfindung dar.

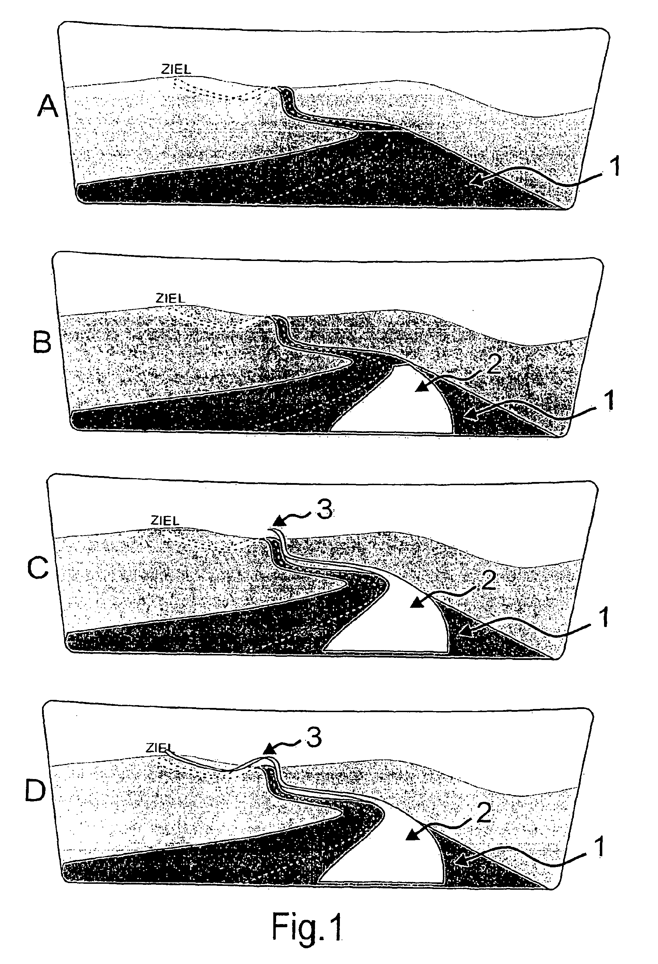

Figur 1 zeigt in Teilbild A den Verlauf einer Fahrbahn symbolisch, wie er durch eine Windschutzscheibe gesehen werden kann. Der Fahrer nimmt die Fahrbahn wahr und steuert das Fahrzeug manuell, was dem konventionellen Fahren entspricht.

Im Teilbild B von Figur 1 ist auf der Fahrbahn 1 ein weißer Bereich 2 dargestellt, der für die Spurhaltung des Fahrzeugs ausgewertet wird. Damit wird ein Fahrspurkorridor definiert, auf dem sich das Fahrzeug in den nächsten Augenblicken bewegen kann. Mit Hilfe eines Assistenzsystems, das diesen Fahrspurkorridor auswertet, ist ein teilautonomes Fahren möglich.

Ein erweitertes Auswertesystem ist in dem Teilbild C von Figur 1 symbolisch dargestellt. Der Auswertebereich des Assistenzsystems erstreckt sich entlang der Fahrbahn 1 bis zum sichtbaren Horizont. Dieser vergrößerte Auswertebereich 2 ermöglicht es, dass der Fahrer innerhalb des sichtbaren Bereichs der Fahrbahn 1 Steueranweisungen gibt und das Fahrzeug somit vorausschauend bis zum Horizont teilautonom lenken kann.

Das Teilbild D von Figur 1 stellt hingegen den Fall des autonomen Fahrens dar. Der Auswertebereich 2 des Fahrzeugs geht über den Horizont 3 hinaus und reicht gegebenenfalls bis zum Ziel der Fahrt. Diese Erweiterung des Auswertebereichs über den Horizont 3 hinaus kann nur durch zusätzliche Information aus Kartenmaterial oder Navigationssystemen ermöglicht werden. Beim autonomen Fahren wird der Fahrzustand stets automatisch kontrolliert, wobei die Daten sowohl im sichtbaren als auch im unsichtbaren Bereich der Fahrbahn Berücksichtigung finden.

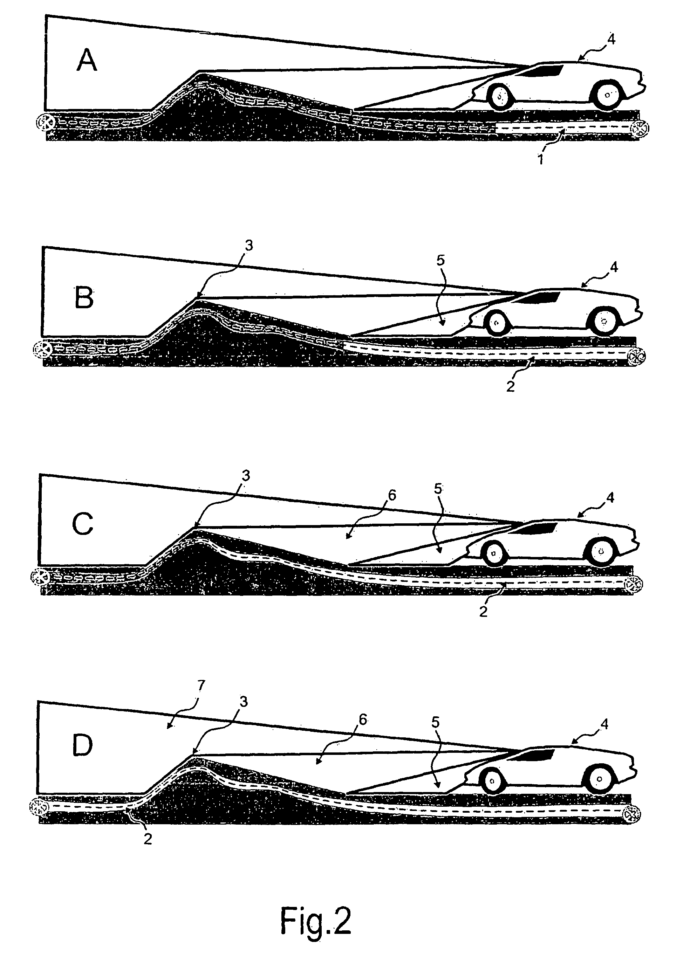

In den Teilbildern von Figur 2 sind die unterschiedlichen Modi des Assistenzsystems in Seitenansichten symbolisch dargestellt. Die einzelnen Teilbilder entsprechen den jeweiligen Teilbildern von Figur 1. Demzufolge ist in dem Teilbild A das Fahrerassistenzsystem ausgeschaltet und der Fahrer des Kraftfahrzeugs 4 lenkt dieses manuell auf der Fahrbahn 1.

Teilbild B zeigt wie das entsprechende Teilbild aus Figur 1 teilautonomes Fahren mit Assistenzsystem, das Spurhaltung unterstützt. Der Auswertebereich 2 erstreckt sich im Bereich der Straßensicht 5 des Fahrers.

Teilbild C zeigt die Straßensicht 5 und den Sichtbereich 6 des Straßenverlaufs bis zum Horizont 3. Beide Bereiche werden von dem Fahrerassistenzsystem zur Spurhaltung und Routenverfolgung für teilautonomes Fahren ausgewertet.

Teilbild D von Figur 2 zeigt neben dem Straßensichtbereich 5 und dem Sichtbereich 6 des Straßenverlaufs bis zum Horizont 3 auch einen Bereich 7, der sich nur über eine Straßenkarte erschließen läßt und jenseits des Horizonts 3 liegt. Da dieser Bereich 7 auch für das Fahren ausgewertet wird, der Fahrer des Fahrzeugs 4 diesen aber nicht wahrnehmen kann, kann von autonomem Fahren gesprochen werden.

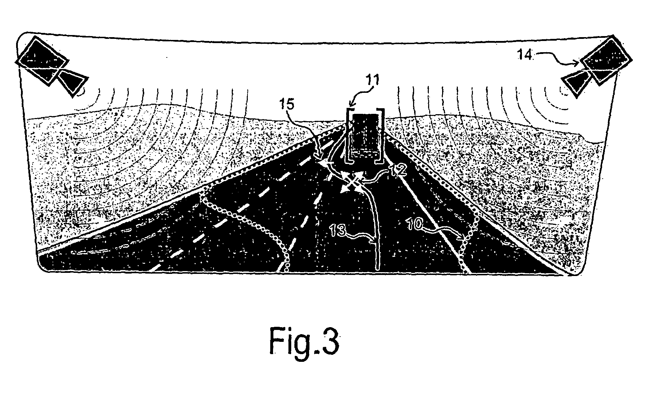

In Figur 3 ist eine konkrete Ausführungsform der vorliegenden Erfindung fotografisch dargestellt, wie sie für den Fahrer eines Kraftfahrzeugs beim Blick durch die Windschutzscheibe wahrgenommen wird. Das Fahrerassistenzsystem (FAS) legt zunächst einen Fahrspurkorridor 10 fest. Dieser entspricht dem prinzipiell befahrbaren Bereich der Straße. Des Weiteren erkennt das Fahrerassistenzsystem ein Hindernis 11 innerhalb des Fahrkorridors 10. Der Fahrer kann mit Hilfe eines Steuerungsmarkers 12 einen Planungspfad 13 der Fahrspur festlegen. Dies kann der Fahrer durch eine beliebige Betätigungseinrichtung, z. B. das Lenkrad, bewerkstelligen. Auf der Windschutzscheibe, die mit einem sogenannten Head-up-Display versehen ist, wird die gewählte Fahrbahn vor dem Hintergrund der tatsächlichen Fahrbahn grafisch dargestellt.

Neben dem Fahrbahnkorridor 10 erfasst die Sensoreinrichtung 14 des Kraftfahrzeugs beispielsweise auch die Fahrspuren einer Autobahn. Falls nun der Planungspfad die Begrenzungslinie einer Fahrspur überquert, kann das Fahrerassistenzsystem in einem geeigneten Abstand vor dem Spurwechsel ein Blinksignal 15 setzen. Unbenommen dabei bleibt, dass der Fahrer das Blinksignal manuell setzt.

Der Fahrtablauf mit dem erfindungsgemäßen Fahrzeugführungssystem läßt sich beispielhaft wie folgt darstellen:
Zu Fahrbeginn wird das Fahrzeug gestartet und der Fahrer fährt das Fahrzeug in bekannter Weise los. Ein bevorzugtes Geschwindigkeitsprofil ist bereits entsprechend dem persönlichen Fahrstil voreingestellt. Mit einem Knopf an der Lenkung wird das Fahrzeugführungssystem eingeschaltet. Ein Geschwindigkeitsregler mit Rückstellung, z. B. das Fahrpedal, schiebt nun einen Cursor-Pfeil beziehungsweise Steuerungsmarker 12 mit dem virtuellen Pfad 13 auf dem Display voran. Damit wird der zeitliche Vorlauf mit der geplanten Bahnführung eingestellt. Die Lenkung wirk nun nicht mehr direkt auf die Räder, sondern auf die Cursor-Position und damit die Krümmung des Pfads. Unterbleibt das Vorausschieben, so fährt das Fahrzeug weiter, verlangsamt jedoch, wenn der Vorlauf sich dem Ende nähert. Während dieser Zeit kann der Fahrer problemlos seinen Blick für etwa drei bis fünf Sekunden für eventuelle Sekundäraufgaben abwenden. Die Fahrerassistenzsysteme steuern während dieser Zeit durch Umfelderkennung 14 und Fahrdynamikmodell das Auto sicher. Beim Blick zurück auf Fahrbahn und Display wird der Vorlauf vom Fahrer wieder ausgedehnt. Etwaige kurzfristig eintretende Einflüsse auf den geplanten Fahrtverlauf werden vom Assistenzsystem durch entsprechende Eingriffe berücksichtigt. Gegebenenfalls wird auch der Fahrer zu einer Korrektur seines Pfades aufgerufen, falls die Umfeldveränderungen dies notwendig machen. Ein weiterer Knopfdruck oder die manuelle Betätigung der Bremse schaltet das Fahrzeugführungssystem sofort ab, und der Fahrer steuert das Fahrzeug wieder rein konventionell.
Während der Fahrt wird der Planungspfad der Fahrspur durch entsprechende Sicherungseinrichtungen der Fahrerassistenzsysteme auf Plausibilität, Sicherheit (Kollisionsfreiheit) und eventuell auch auf Komfort überprüft und gegebenenfalls korrigiert. Das Fahrzeug fährt mit kurzem zeitlichen Verzug diesen geplanten Pfad mit einer sinnvoll resultierenden Geschwindigkeit nach.
Erfindungsgemäß wird somit der Modus der Fahrzeugführung erweitert. Mit den Fahrerassistenzsystemen hat das Fahrzeug ein Führungssystem, das einerseits die Fahrdynamik beherrscht und andererseits ein genaues Wissen über die Straßen- und Verkehrssituation besitzt. Somit ist das Fahrzeug allein in der Lage, seine unmittelbaren Steuerungsaufgaben autark vorzunehmen. In Kombination mit einem Navigationssystem ist auch autonomes Fahren eingeschlossen. Die Aufgabe des Fahrers besteht nach wie vor im Wesentlichen in der Bahnführung des Fahrzeugs. Die Bahnführung kann bei diesem neuartigen System jedoch nicht nur unmittelbar, sondern auch mit einem gewissen zeitlichen Vorlauf in die Zukunft vorgenommen werden. Das bedeutet, dass die bisherige zweidimensionale Steuerung des Fahrzeugs um die Dimension der Zeit erweitert wird.
In vorteilhafter Weise schafft der Fahrer sich und den Fahrerassistenzsystemen damit eine Zeitlücke. Dadurch können die Systeme wirkungsvoll die sicherheits- und effizienzsteigernden Regelungen vornehmen. Der Fahrer ist weiterhin in den Fahrtablauf aktiv eingebunden. Die Planungskompetenz des Fahrers kann durch seine antizipierende Aufgabe voll zur Geltung gelangen.

## Patentansprüche

1. Fahrzeug (4) mit einer integrierten Vorrichtung zum Führen des Fahrzeugs (4), wobei das Fahrzeug (4) zumindest anhand eines Lenkrads und eines Fahrpedals konventionell steuerbar ist, und wobei die integrierte Vorrichtung aufweist:
- eine Sensoreinrichtung (14) zum Erfassen von Umgebungsdaten aus der Umgebung des Fahrzeugs,
- eine Betätigungseinrichtung, die das Lenkrad und das Fahrpedal umfasst, zum Eingeben von Fahrzeugführungsdaten durch einen in dem Fahrzeug befindlichen Fahrer, wobei die Fahrzeugführungsdaten Vorlaufdaten umfassen, welche zukünftige Steuerungsmanöver des Fahrzeugs (4) betreffen, und
- eine Steuereinrichtung zur Steuerung des Fahrzeugs auf der Grundlage der Umgebungsdaten und der Fahrzeugführungsdaten, wobei das Fahrzeug (4) durch die Steuereinrichtung während einer durch die Vorlaufdaten vordefinierten Zeitdauer automatisch oder teilautomatisch anhand der Umgebungsdaten und Vorlaufdaten steuerbar ist,
**dadurch gekennzeichnet, dass**
bei eingeschalteter Steuereinrichtung die Lenkung nicht mehr direkt auf die Räder wirkt, sondern auf die Position eines Steuerungsmarkers (12) wirkt, mit dem ein Planungspfad (13) festlegbar ist.

2. Fahrzeug nach Anspruch 1, wobei die Umgebungsdaten Daten über einen Fahrspurkorridor (10) umfassen.

3. Fahrzeug nach Anspruch 1 oder 2, wobei die Umgebungsdaten Daten über eine Verkehrs- und/oder Straßensituation beinhalten.

4. Fahrzeug nach einem der Ansprüche 1 bis 3, die eine Navigationseinrichtung zum Empfang von Navigationsdaten und deren Weiterleitung an die Steuereinrichtung zur Steuerung des Fahrzeugs aufweist.

5. Fahrzeug nach einem der Ansprüche 1 bis 4, wobei die Betätigungseinrichtung ein Lenkrad oder einen Side-Stick umfasst.

6. Fahrzeug nach einem der Ansprüche 1 bis 5, wobei die Vorrichtung ein auf der Windschutzscheibe des Fahrzeugs anzeigendes Head-Up-Display zur Anzeige von einer Visualisierung einer Spurführung aufweist.

7. Fahrzeug nach einem der Ansprüche 1 bis 6, wobei mit der Betätigungseinrichtung eine geplante Fahrstrecke (13) auf dem Display zeichenbar ist.

8. Fahrzeug nach Anspruch 7, die eine Sicherungseinrichtung zur Überprüfung der geplanten Fahrstrecke (13) auf Plausibilität, Sicherheit und/oder Komfort aufweist.

9. Fahrzeug nach Anspruch 8, wobei mit Hilfe der Sicherheitseinrichtung die geplante Fahrstrecke (13) hinsichtlich der örtlichen und zeitlichen Befahrung automatisch korrigierbar ist.

10. Fahrzeug nach einem der Ansprüche 1 bis 9, wobei mit Hilfe der Vorlaufdaten die Größe des zeitlichen Vorlaufs wählbar ist.

11. Verfahren zum Führen eines Fahrzeugs (4) durch
Erfassen von Umgebungsdaten aus der Umgebung des Fahrzeugs,
Eingeben von Fahrzeugführungsdaten durch einen in dem Fahrzeug befindlichen Fahrer, wobei die Fahrzeugführungsdaten Vorlaufdaten, die zukünftige Steuerungsmanöver des Fahrzeugs betreffen, umfassen,
Steuern des Fahrzeugs auf der Grundlage der Umgebungsdaten und der Fahrzeugführungsdaten, wobei das Fahrzeug während einer durch die Vorlaufdaten vordefinierten Zeitdauer automatisch oder teilautomatisch anhand der Umgebungsdaten und Vorlaufdaten gesteuert wird,
**dadurch gekennzeichnet, dass**
das automatische oder teilautomatische Steuern des Fahrzeugs von dem Fahrer eingeschaltet oder ausgeschaltet wird, wobei bei ausgeschaltetem automatischen Steuern das Fahrzeug von dem Fahrer manuell zumindest anhand eines Lenkrads und eines Fahrpedals konventionell gesteuert wird und bei eingeschaltetem automatischen Steuern durch das Lenkrad und das Fahrpedal die Position eines Steuerungsmarkers bestimmt wird, mit dem ein Planungspfad (13) festgelegt wird.

12. Verfahren nach Anspruch 11, wobei Navigationsdaten von dem Fahrzeug bereitgestellt oder empfangen und zur Steuerung des Fahrzeugs weiter verwendet werden.

13. Verfahren nach Anspruch 11 oder 12, wobei die Fahrzeugführungsdaten durch ein Lenkrad oder einen Side-Stick eingegeben werden.

14. Verfahren nach einem der Ansprüche 11 bis 13, wobei ein Head-up-Display eine Visualisierung einer Spurführung auf der Windschutzscheibe anzeigt.

15. Verfahren nach einem der Ansprüche 11 bis 14, wobei eine geplante Fahrstrecke (13) auf einem Display gezeichnet wird.

16. Verfahren nach einem der Ansprüche 11 bis 15, wobei die Fahrtstrecken anderer Fahrzeuge in der Nähe ebenfalls auf dem Display gezeichnet werden.

17. Verfahren nach Anspruch 15, wobei das Befahren der geplanten Fahrstrecke automatisch örtlich und zeitlich korrigiert wird.

18. Verfahren nach einem der Ansprüche 11 bis 17, wobei mit Hilfe der Vorlaufdaten die Größe des zeitlichen Vorlaufs gewählt wird.

## Claims

1. Vehicle (4) having an integrated apparatus for guiding the vehicle (4), the vehicle (4) being able to be conventionally controlled at least using a steering wheel and an accelerator, and the integrated apparatus having:
- a sensor device (14) for detecting data relating to the surroundings from the area surrounding the vehicle,
- an operating device which comprises the steering wheel and the accelerator and is intended to be used by a driver in the vehicle to input vehicle guidance data, the vehicle guidance data comprising advance data which relate to future control manoeuvres of the vehicle (4), and
- a control device for controlling the vehicle on the basis of the data relating to the surroundings and the vehicle guidance data, the vehicle (4) being able to be controlled automatically or semi-automatically by the control device, during a period predefined by the advance data, on the basis of the data relating to the surroundings and advance data,
**characterized in that,**
when the control device is switched on, the steering system no longer acts directly on the wheels but rather on the position of a control marker (12) which can be used to determine a planning path (13).

2. Vehicle according to Claim 1, the data relating to the surroundings comprising data relating to a lane corridor (10).

3. Vehicle according to Claim 1 or 2, the data relating to the surroundings containing data relating to a traffic situation and/or a road situation.

4. Vehicle according to one of Claims 1 to 3, which has a navigation device for receiving navigation data and forwarding the latter to the control device for controlling the vehicle.

5. Vehicle according to one of Claims 1 to 4, the operating device comprising a steering wheel or a side-stick.

6. Vehicle according to one of Claims 1 to 5, the apparatus having a head-up display which is displayed on the windscreen of the vehicle and is intended to display a lane guidance visualization.

7. Vehicle according to one of Claims 1 to 6, the operating device being able to be used to depict a planned route (13) on the display.

8. Vehicle according to Claim 7, which has a safety device for checking the plausibility, safety and/or convenience of the planned route (13).

9. Vehicle according to Claim 8, the safety device being able to be used to automatically correct the planned route (13) with regard to the local and temporal driving.

10. Vehicle according to one of Claims 1 to 9, the advance data being able to be used to select the magnitude of the temporal advance.

11. Method for guiding a vehicle (4) by
detecting data relating to the surroundings from the area surrounding the vehicle,
a driver in the vehicle inputting vehicle guidance data, the vehicle guidance data comprising advance data which relate to future control manoeuvres of the vehicle,
controlling the vehicle on the basis of the data relating to the surroundings and the vehicle guidance data, the vehicle being controlled automatically or semi-automatically, during a period predefined by the advance data, on the basis of the data relating to the surroundings and advance data,
**characterized in that**
the automatic or semi-automatic control of the vehicle is switched on or off by the driver, the vehicle being manually controlled in a conventional manner by the driver at least using a steering wheel and an accelerator when automatic control is switched off, and the position of a control marker which is used to determine a planning path (13) being determined by the steering wheel and the accelerator when automatic control is switched on.

12. Method according to Claim 11, navigation data being provided or received by the vehicle and being used further to control the vehicle.

13. Method according to Claim 11 or 12, the vehicle guidance data being input by means of a steering wheel or a side-stick.

14. Method according to one of Claims 11 to 13, a head-up display displaying a lane guidance visualization on the windscreen.

15. Method according to one of Claims 11 to 14, a planned route (13) being depicted on a display.

16. Method according to one of Claims 11 to 15, the routes of other vehicles in the vicinity likewise being depicted on the display.

17. Method according to Claim 15, the operation of driving along the planned route being locally and temporally corrected in an automatic manner.

18. Method according to one of Claims 11 to 17, the advance data being used to select the magnitude of the temporal advance.

## Revendications

1. Véhicule (4) comprenant un dispositif intégré pour guider le véhicule (4), le véhicule (4) pouvant être commandé au moins à l'aide d'un volant de direction et d'une pédale d'accélération de manière conventionnelle, et le dispositif intégré présentant :
- un système de capteur (14) pour détecter des données périphériques provenant de l'environnement du véhicule,
- un système d'actionnement qui comprend le volant de direction et la pédale d'accélération, pour que le conducteur se trouvant dans le véhicule entre des données de guidage du véhicule, les données de guidage du véhicule comprenant des données préalables qui concernent des manoeuvres de commande futures du véhicule (4), et
- un système de commande pour commander le véhicule sur la base des données périphériques et des données de guidage du véhicule, le véhicule (4) pouvant être commandé par le système de commande pendant une durée prédéterminée par les données préalables, de manière automatique ou semi-automatique à l'aide des données périphériques et des données préalables,
**caractérisé en ce que**
lorsque le système de commande est enclenché, la direction n'agit plus directement sur les roues, mais sur la position d'un marqueur de commande (12), avec lequel un chemin planifié (13) peut être établi.

2. Véhicule selon la revendication 1, dans lequel les données périphériques comprennent des données relatives à un couloir de circulation (10).

3. Véhicule selon la revendication 1 ou 2, dans lequel les données périphériques contiennent des données concernant une situation de circulation et/ou routière.

4. Véhicule selon l'une quelconque des revendications 1 à 3, qui présente un système de navigation pour recevoir des données de navigation et les transférer au système de commande pour la commande du véhicule.

5. Véhicule selon l'une quelconque des revendications 1 à 4, dans lequel le système d'actionnement comprend un volant de direction ou un levier latéral.

6. Véhicule selon l'une quelconque des revendications 1 à 5, dans lequel le dispositif présente un affichage tête haute s'affichant sur le pare-brise du véhicule, pour afficher une visualisation d'une chaussée.

7. Véhicule selon l'une quelconque des revendications 1 à 6, dans lequel une trajectoire (13) planifiée au moyen du système d'actionnement peut être indiquée sur l'affichage.

8. Véhicule selon la revendication 7, qui présente un système de sécurité pour contrôler la trajectoire (13) planifiée en termes de plausibilité, sécurité et/ou confort.

9. Véhicule selon la revendication 8, dans lequel à l'aide du système de sécurité, la trajectoire (13) planifiée peut être corrigée automatiquement en termes de conduite locale et temporelle.

10. Véhicule selon l'une quelconque des revendications 1 à 9, dans lequel à l'aide des données préalables, on peut sélectionner la mesure de l'avance temporelle.

11. Procédé pour guider un véhicule (4) en :
détectant des données périphériques provenant de l'environnement du véhicule,
permettant à un conducteur se trouvant dans le véhicule d'entrer des données de guidage du véhicule, les données de guidage du véhicule comprenant des données préalables, qui concernent des manoeuvres de commande futures du véhicule,
commandant le véhicule sur la base des données périphériques et des données de guidage du véhicule, le véhicule étant commandé pendant une durée prédéterminée par les données préalables de manière automatique ou semi-automatique à l'aide des données périphériques et des données préalables,
**caractérisé en ce que**
la commande automatique ou semi-automatique du véhicule est enclenchée ou coupée par le conducteur, et lorsque la commande automatique est coupée, le véhicule est commandé de manière conventionnelle manuellement par le conducteur au moins à l'aide d'un volant de direction et d'une pédale d'accélération, et lorsque la commande automatique est enclenchée par le volant de direction et la pédale d'accélération, la position d'un marqueur de commande, avec laquelle un chemin planifié (13) est établi, est déterminée.

12. Procédé selon la revendication 11, dans lequel des données de navigation sont fournies ou reçues par le véhicule et sont utilisées en outre pour commander le véhicule.

13. Procédé selon la revendication 11 ou 12, dans lequel les données de guidage du véhicule sont entrées par un volant de direction ou un levier latéral.

14. Procédé selon l'une quelconque des revendications 11 à 13, dans lequel un affichage tête haute affiche une visualisation d'une chaussée sur le pare-brise.

15. Procédé selon l'une quelconque des revendications 11 à 14, dans lequel une trajectoire (13) planifiée est indiquée sur un affichage.

16. Procédé selon l'une quelconque des revendications 11 à 15, dans lequel les trajectoires d'autres véhicules à proximité sont indiquées également sur l'affichage.

17. Procédé selon la revendication 15, dans lequel la conduite sur la trajectoire planifiée est corrigée automatiquement localement et temporellement.

18. Procédé selon l'une quelconque des revendications 11 à 17, dans lequel, à l'aide des données préalables, on sélectionne la mesure de l'avance temporelle.
